# EUROPÄISCHE PATENTSCHRIFT

(11) **EP 2 914 909 B1**
(45) Veröffentlichungstag und Bekanntmachung des Hinweises auf die Patenterteilung: **18.12.2019**
(21) Anmeldenummer: 13785888.2
(22) Anmeldetag: 04.11.2013
(51) Int. Cl.: F24S 25/10, F24S 25/617

(54) **BEFESTIGER EINES DACHMONTAGETRÄGERS UND DACHMONTAGESYSTEM**
FASTENER OF A ROOF MOUNTING CARRIER AND ROOF MOUNTING SYSTEM
FIXATION D'UN SUPPORT DE MONTAGE DE TOIT ET SYSTÈME DE MONTAGE DE TOIT

(30) Priorität: 05.11.2012 EP 12191266
(43) Veröffentlichungstag der Anmeldung: 09.09.2015
(60) Teilanmeldung: 19161981.6
(73) Patentinhaber: Sika Technology AG, 6340 Baar (CH)
(72) Erfinder: BLEIBLER, Alexander, CH-8406 Winterthur (CH); HÜBSCHER, Peter, CH-6012 Obernau (CH); MEIER, Heinz, CH-8032 Zürich (CH); ROHRER, Hans, CH-6072 Sachseln (CH)
(74) Vertreter: Sika Patent Attorneys
(86) Internationale Anmeldenummer: PCT/EP2013/072959
(87) Internationale Veröffentlichungsnummer: WO 2014/068120

(56) Entgegenhaltungen:
- WO-A1-2011/071489
- WO-A2-2012/004542
- DE-U1-202006 007 066
- DE-U1-202010 005 531
- US-A1- 2010 269 447

## Beschreibung

### Technisches Gebiet

Die Erfindung betrifft einen Befestiger eines Dachmontageträgers, insbesondere eines Trägers einer Solartechnikanlage. Sie betrifft des Weiteren ein Dachmontagesystem, insbesondere einer Solartechnikanlage.

### Stand der Technik

Die Montage von Solartechnikanlagen, sowohl von Photovoltaikanlagen als auch von Solarkollektoren, auf Hausdächern erfolgt mit speziellen Dachmontagesystemen, die eine Durchdringung der Dachhaut durch Montagehilfsmittel soweit als möglich zu vermeiden versuchen.

Speziell bei Flachdächern, deren Abdichtung durch Kunststoff-Dichtungsbahnen (KDB) hergestellt ist, ist es von Bedeutung, eine Durchdringung der Dachabdichtung durch die Träger oder Befestigungsmittel des Dachmontagesystems zu vermeiden. In der EP 2 418 438 A2 wird ein Träger eines Dachmontagesystems für Photovoltaikanlagen offenbart, der mittels flexibler Befestigungsstreifen durch Verschweißen oder Verkleben durchdringungsfrei mit einer Kunststoff- Dichtungsbahn verbunden werden kann.

Aus der WO 2012/004542 A2 ist ein Befestiger eines Dachmontageträgers bekannt, der eine Grundplatte aufweist, in der Stifte eingebracht sind, die die Grundplatte durchdringen. Insgesamt ist die Struktur gemäß WO 2012/004542 A2 als vergleichsweise komplex, was mit einer entsprechend aufwändigen Herstellung verbunden ist. Aus der DE 20 2010 005 531 U1 ist ein einstückiger Halter bekannt, bei dem eine Grundplatte einstückig mit Winkelstegen ausgeführt ist. Zur eigentlichen Befestigung sind Schraubenlöcher vorgesehen, die mit entsprechenden Schrauben zusammenwirken. Die Winkelstege gewährleisten somit lediglich eine Führung, wobei die eigentliche Befestigung über eine Schraubverbindung erfolgt. Im Ergebnis ist auch diese Lösung vergleichsweise kompliziert und mit einem hohen Herstellungs- bzw. Montageaufwand verbunden. Aus der DE-A-102009056318 ist ein Träger für Solarpaneel bekannt, der eine Wanne und mit der Wanne verbundene Befestigungsmittel umfasst. Die Verbindungsmittel weist die Gestalt eines Quaders mit einem zeitlich zugänglichen Schlitz auf und Laschen, in denen Bohrungen für Schrauben vorgesehen sind.

### Darstellung der Erfindung

Der Erfindung liegt die Aufgabe zugrunde, einen verbesserten Befestiger eines Dachmontageträges sowie ein entsprechend verbessertes Dachmontagesystem anzugeben, die eine erhöhte Festigkeit und Zuverlässigkeit bieten und kostengünstig herstell- und montierbar sind.

Diese Aufgabe wird durch einen Befestiger mit den Merkmalen des Anspruchs 1 sowie durch ein Dachmontagesystem mit den Merkmalen des Anspruchs 11 gelöst. Zweckmäßige Fortbildungen des Erfindungsgedankens sind Gegenstand der jeweiligen abhängigen Ansprüche.

Ein Gedanke der Erfindung besteht darin, den Befestiger mit zwei funktional und hinsichtlich wesentlicher mechanischer Eigenschaften unterschiedlich definierten Abschnitten auszubilden: Zum einen wird für die Anbringung an der Unterlage ein Grundplattenabschnitt vorgesehen, der hinreichend großflächig ist und eine gewisse Flexibilität zur Anpassung an einen (geringfügig) unebenen Untergrund aufweist. Zum anderen ist zur sicheren Fixierung des Profilabschnitts des zu befestigenden Trägers ein (eher) steifer Abschnitt vorgesehen. Des Weiteren gehört zur Erfindung der Gedanke, diesen letzten Abschnitt als Profilabschnitt auszubilden, der geometrisch zum Umgreifen und formschlüssigen Fixieren eines Profilabschnitts des Dachmontageträgers ohne zusätzliche Befestigungsmittel wie Schrauben o. ä. ausgebildet ist. Erfindungsgemäss hat der Befestiger genau einen solchen umgreifenden Profilabschnitt. Unter "Profilabschnitt" ist ein langgestreckter Abschnitt eines Bauteils mit einem vorgegebenen Querschnitt (z.B. mit einem oder umfassend einen C-, U-, T-, L-, I-Querschnitt) zu verstehen. Insbesondere ist die Materialstärke derartiger Profilabschnitte konstant.

In einer Ausführung der Erfindung hat der Grundplattenabschnitt einen streifenartigen ersten Teilabschnitt, von dem der Profilabschnitt aufsteht, und einen sich vom ersten Teilabschnitt zu einer Längsseite hin als Verbreiterung erstreckenden zweiten Teilabschnitt, der flexibler als der erste Teilabschnitt ist. In einer weiteren Ausführung hat der Grundplattenabschnitt einen sich vom ersten Teilabschnitt an dessen Enden zur dem zweiten Teilabschnitt gegenüberliegenden Seite erstreckenden dritten und vierten Teilabschnitt. Beide Ausführungen dienen dazu, eine hinreichend große Grundfläche des Befestigers in vorteilhafter Weise bereitzustellen, die insbesondere eine Abstützung auf dem Untergrund beidseits des mit dem Befestiger fixierten Träger-Profilabschnitts gewährleistet.

In einer weiteren Ausführung ist der Profilabschnitt U-förmig gestaltet und das "U" zum Grundplattenabschnitt hin offen, derart, dass der im montierten Zustand umgriffene Profilabschnitt des Dachmontageträgers zwischen dem Grundplattenabschnitt und dem Profilabschnitt des Befestigers eingeschlossen ist. Hierbei hat das "U" einen freien ersten Schenkel, der vom Grundplattenabschnitt um einen hinreichend breiten Spalt beabstandet ist, dass durch den Spalt der Profilabschnitt des Dachmontageträgers - unter Verkippen desselben um eine zu seiner Längserstreckung parallele Achse - seitlich in den Profilabschnitt des Befestigers eingeführt werden kann.

In einer Ausgestaltung ist hierbei vorgesehen, dass der zweite Schenkel des "U" steif, insbesondere einstückig, mit dem Grundplattenabschnitt zusammenhängt. Weiter ausgestaltend ist vorgesehen, dass dort, wo der zweite Schenkel des "U" mit dem Grundplattenabschnitt zusammenhängt, quer zur Längserstreckung des ersten Teilabschnitts des Grundplattenabschnitts verlaufenden Versteifungsrippen in die Kehle zwischen Profilabschnitt und Grundplattenabschnitt eingeformt sind. Insgesamt sichert eine bevorzugtermaßen derart ausgebildete Konfiguration des Befestigers hinreichende Steifigkeit und stabile Lage des befestigten Trägers auf dem Untergrund, zugleich aber eine hinreichend leichte Montierbarkeit und haltbare Befestigung am Untergrund.

In einer fertigungstechnischen Ausgestaltung ist der Befestiger einstückig, insbesondere als Spritzgussteil gefertigt. Hierbei kann einerseits eine materialeinheitliche Ausbildung, alternativ hierzu aber auch eine Ausbildung aus einer ersten Materialkomponente für den flexiblen Grundplattenabschnitt und einer zweiten Materialkomponente für den (im wesentlichen) steifen Profilabschnitt vorgesehen sein.

Für die aus derzeitiger Sicht wichtigsten Anwendungsbereiche ist mindestens der Grundplattenabschnitt aus warm schweißbarem Material, insbesondere PVC oder TPO, oder klebfähigem Material gefertigt. Damit wird dem Umstand Rechnung getragen, dass Kunststoff-Dichtungsbahnen, auf denen der Befestiger zum Einsatz kommen soll, typischerweise aus PVC oder TPO (auch bezeichnet als FPO) bestehen, aber auch sog. Flüssigfolien als mögliche Untergründe zu berücksichtigen sind.

Eine Länge des Profilabschnitts ist vorzugsweise (im Mittel) mindestens 3-mal, weiter vorzugsweise mindestens 5-mal so groß wie eine maximale Erstreckung in eine Richtung senkrecht auf die Längsrichtung des Profilabschnitts. Dadurch kann der Befestiger eine besonders zuverlässige Befestigung realisieren. Alternativ oder zusätzlich kann der Profilabschnitt eine konstante Materialstärke aufweisen. Dadurch ist der Profilabschnitt besonders einfach herstellbar und kann dennoch eine sichere Verbindung gewährleisten.

Vorzugsweise ist eine Materialstärke des Profilabschnitts (im Mittel) größer (mindestens 1,2-mal oder mindestens 1,5-mal) als eine Materialstärke des Grundplattenabschnitts. Alternativ oder zusätzlich kann ein E-Modul des Profilabschnitts (im Mittel) größer sein als ein E-Modul eines Materials des Grundplattenabschnitts (mindestens 1,2-mal oder mindestens 1,5-mal oder mindestens 2-mal so groß). Durch diese Maßnahmen kann auf einfache Weise eine erhöhte Steifigkeit des Profilabschnitts gegenüber dem Grundplattenabschnitt erreicht werden.

Erfindungsgemäss ist eine (durchschnittliche) Höhe des Profilabschnitts größer als eine (durchschnittliche) Breite des Profilabschnitts (vorzugsweise mindestens 1,5-mal, weiter vorzugsweise mindestens 2-mal, noch weiter vorzugsweise mindestens 3-mal so groß). Die Höhenrichtung ist senkrecht auf die Oberfläche des Grundplattenabschnitts. Die Breitenrichtung ist senkrecht auf die Höhenrichtung und die Längsrichtung, die durch die Erstreckung des Profilabschnitts vorgesehen ist. Dadurch kann eine Längskante eines Dachmontageträgers besonders sicher in dem Profilabschnitt untergebracht werden, wobei auf synergistische Weise die verschiedenen Steifigkeiten von Grundkörperabschnitt und Profilabschnitt ausgenutzt werden können. Insgesamt wird mit einfachen Maßnahmen eine zuverlässige Befestigung realisiert. Handelt es sich bei dem Profilabschnitt um einen U-Profilabschnitt (wie weiter oben beschrieben), kann der dem ersten Schenkel gegenüberliegende zweite Schenkel des "U" größer sein als ein Verbindungsabschnitt zwischen den beiden Schenkeln, insbesondere mindestens 1,5-mal, vorzugsweise mindestens 2-mal, noch weiter vorzugsweise mindestens 3-mal so groß. Bei einer (wie oben beschrieben) U-förmigen Ausgestaltung des Profilabschnitts wird die Höhe des Profilabschnitts durch den dem ersten Schenkel gegenüberliegenden zweiten Schenkel definiert. Eine Breite wird durch den Verbindungsabschnitt zwischen den beiden Schenkeln definiert.

In einer Ausführung des vorgeschlagenen Dachmontagesystems weist der eine oder die mehreren Dachmontageträger einen langgestreckten Grundkörper mit zwei Längsseiten und zwei Stirnseiten auf, und die Befestiger sind zum Anbringen von mindestens einer Längsseite des Dachmontageträgers ausgebildet. Für handelsübliche Träger, die an ihrer Unterseite zwei Profile zur Abstützung auf dem Untergrund aufweisen, sind zwei oder mehr, insbesondere vier Befestiger systemkonform vorgesehen.

In einer bevorzugten Ausführungsform des Dachmontagesystems weist dieses mindestens einen ersten und einen zweiten (vom ersten separaten) Befestiger auf, wobei der erste Befestiger zum Anbringen einer ersten Längskante des Dachmontageträgers vorgesehen ist und der zweite Befestiger zum Anbringen einer zweiten Längskante des Dachmontageträgers vorgesehen ist. Weiter vorzugsweise sind (mindestens) zwei erste Befestiger und (mindestens) zwei zweite Befestiger vorgesehen. Gemäß einem allgemeinen Gedanken der vorliegenden Erfindung liegen also mehrere (separate) Befestiger innerhalb eines Dachmontagesystems vor, die einem (jeweiligen) Dachmontageträger zugeordnet sind. Dadurch wird auf synergistische Weise in Kombination mit dem flexiblen Grundplattenabschnitt und dem vergleichsweise steifen Profilabschnitt erreicht, dass auch bei unebenen Untergründen eine zuverlässige Befestigung des Dachmontageträgers erreicht werden kann.

Vorzugsweise ist mindestens ein erster sowie zweiter Befestiger vorgesehen, wobei die Befestiger einen "U"-förmigen Profilabschnitt aufweisen, wobei die Öffnungen des "U" des ersten und zweiten Befestigers einander zugewandt sind. Eine derartige Konstruktion erleichtert die Befestigung des Dachmontageträgers. Insbesondere wird dabei ausgenutzt, dass die getrennten Befestiger gegeneinander bewegbar bzw. gegeneinander verkippbar sind (vor der Befestigung), so dass die Längskanten des Dachmontageträgers in die Profilabschnitte (durch Verkippen) eingebracht werden können. Dies wäre beispielsweise bei Befestigungsabschnitten, die gegeneinander fixiert ausgebildet sind, nicht möglich.

### Kurze Beschreibung der Zeichnung

Vorteile und Zweckmäßigkeiten der Erfindung ergeben sich im Übrigen aus der nachfolgenden Beschreibung von Ausführungsbeispielen und -aspekten, teilweise anhand der Figuren. Von diesen zeigen:
- Fig. 1: eine perspektivische Darstellung eines Befestigers gemäß einer Ausführungsform der Erfindung und
- Fig. 2: eine perspektivische Darstellung des Dachträgers eines Dachmontagesystems, versehen mit mehreren Befestigern gemäß Fig. 1.

### Weg zur Ausführung der Erfindung

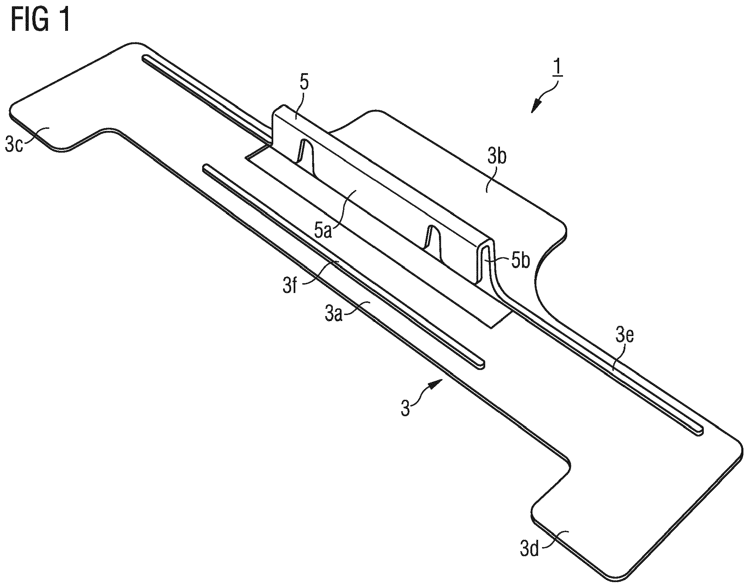

Fig. 1 zeigt in einer perspektivischen Darstellung einen Befestiger 1 eines Dachträgers für ein Photovoltaiksystem, der einstückig als Spritzgussteil gefertigt ist und einen im wesentlichen ebenen Grundplattenabschnitt 3 mit einer gewissen Flexibilität und einen hiervon aufstehenden, im wesentlichen steifen Profilabschnitt 5 umfasst. Der Grundplattenabschnitt 3 hat einen streifenartigen ersten Teilabschnitt 3a, von dessen Mittenbereich der Profilabschnitt 5 aufsteht, und einen sich hiervon zu einer Längsseite hin als Verbreiterung erstreckenden zweiten Teilabschnitt 3b. Zur gegenüberliegenden Seite hin erstrecken sich vom ersten Teilabschnitt 3a an dessen Enden zwei weitere verbreiternde Teilabschnitte 3c, 3d. In den streifenartigen ersten Teilabschnitt 3a sind nahe dessen beiden Längskanten zwei parallel zu diesen laufenden Versteifungsrippen 3e, 3f eingeformt.

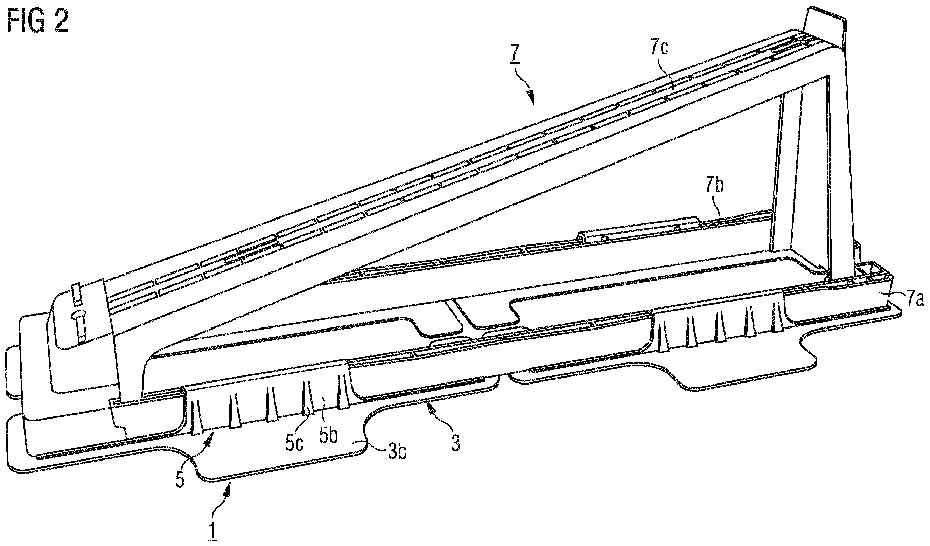

Der Profilabschnitt 5 steht von der ersten Versteifungsrippe 3e auf und hat im Querschnitt die Gestalt eines schmalen "U". Das "U" ist einseitig zum Grundplattenabschnitt 3 hin offen, derart, dass ein Profilabschnitt eines Dachmontageträgers auf dem der Befestiger in seiner geometrischen Gestalt angepasst ist, eingeschoben und zwischen dem Grundplattenabschnitt und dem Profilabschnitt 3, eingeschlossen und von diesen gemeinsam fixiert sein kann. Entsprechend hat das U-förmige Profil 5 einen freien ersten Schenkel 5a und einen mit dem Grundplattenabschnitt verbundenen zweiten Schenkel 5b. In Fig. 2 nicht dargestellt, aber in Fig. 2 (siehe dazu weiter unten) zu erkennen, sind Versteifungsrippen 5c am zweiten Schenkel 5b des Profilabschnitts 5, die diesen zusätzlichen gegenüber dem Grundplattenabschnitt 3 abstützen und die Verbindung zwischen beiden versteifen.

Fig. 2 zeigt vier Befestiger der in Fig. 1 gezeigten und weiter oben beschriebenen Art, angebracht an einem Träger 7 eines Dachmontagesystems. Der Träger 7 umfasst ein Unterteil aus zwei Profilteilen 7a, 7b und ein diesem gegenüber geneigtes Oberteil 7c, auf dem im Gebrauchszustand des Trägers Photovoltaikmodule gehaltert sind. Der genaue Aufbau des Trägers ist im Zusammenhang mit der Erfindung nicht von Belang, es ist aber darauf hinzuweisen, dass der Profilabschnitt 5 des Befestigers 1 derart an die Profilteile 7a, 7b des Trägers 7 angepasst ist, dass er in dieses auf die in Fig. 2 gezeigte Weise eingreift bzw. einen Abschnitt des Träger-Profilteiles umgreift und ausschließlich formschlüssig (ohne zusätzliche Befestigungselemente) auf dem Grundplattenabschnitt 3 des Befestigers hält. Da jener wiederum mit einer darunterliegenden Kunststoffbahn verschweißt oder (im Falle von Flüssigfolie) verklebt ist, halten die Befestiger den Träger zuverlässig auf der Dachhaut.

Es ist überdies zu erkennen, dass die Verbreiterungen 3c, 3d nicht nur zur Vergrößerung der Auflagefläche des Befestigers auf der Dachoberfläche dienen, sondern auch eine Unterlage für die Endabschnitte der Trägerprofile 7a, 7b bilden und eine mögliche Beschädigung der Dachhaut durch jene Endabschnitte zu vermeiden helfen. Dem gleichen Ziel dienen Radien in allen Eckbereichen des Grundplattenabschnitts des Befestigers.

Die Ausführung der Erfindung ist nicht auf die oben erläuterten Beispiele und Aspekte beschränkt, sondern ebenso in einer Vielzahl von Abwandlungen möglich, die im Rahmen fachmännischen Handelns liegen.

### Bezugszeichenliste

- 1: Befestiger
- 3: Grundplattenabschnitt
- 3a, 3b, 3c, 3d: Teilabschnitt des Grundplattenabschnitts
- 3e, 3f: Versteifungsrippe
- 5: Profilabschnitt des Befestigers
- 5a, 5b: Schenkel des Profilabschnitts
- 5c: Versteifungsrippen
- 7: Dachmontageträger
- 7a, 7b: Profilabschnitt des Dachmontageträgers
- 7c: Oberteil

## Patentansprüche

1. Befestiger (1) eines Dachmontageträgers (7), insbesondere eines Trägers einer Solartechnikanlage, umfassend einen mindestens abschnittsweise flexiblen Grundplattenabschnitt (3) und genau einen vom Grundplattenabschnitt aufstehenden, im Wesentlichen steifen Profilabschnitt (5), der zum Umgreifen und formschlüssigen Fixieren eines Profilabschnitts (7a, 7b) des Dachmontageträgers ausgebildet ist, wobei eine Höhe des Profilabschnitts größer als eine Breite des Profilabschnitts ist und wobei die Höhenrichtung senkrecht auf die Oberfläche des Grundplattenabschnitts ist und die Breitenrichtung senkrecht auf die Höhenrichtung und die Längsrichtung, die durch die Erstreckung des Profilabschnitts vorgesehen ist, **dadurch gekennzeichnet, dass** der Grundplattenabschnitt (3) einen streifenartigen ersten Teilabschnitt (3a), von dem der Profilabschnitt aufsteht, und einen sich vom ersten Teilabschnitt zu einer Längsseite hin als Verbreiterung erstreckenden zweiten Teilabschnitt (3b) umfasst, der flexibler als der erste Teilabschnitt ist.

2. Befestiger nach Anspruch 1, wobei der Grundplattenabschnitt (3) einen sich vom ersten Teilabschnitt an dessen Enden zu dem zweiten Teilabschnitt gegenüberliegenden Seite erstreckenden dritten und vierten Teilabschnitt (3c, 3d) hat.

3. Befestiger nach einem der vorangehenden Ansprüche, wobei der Profilabschnitt (5) U-förmig gestaltet und das "U" zum Grundplattenabschnitt (3) hin offen ist, derart, dass der im montierten Zustand umgriffene Profilabschnitt (7a, 7b) des Dachmontageträgers (7) zwischen dem Grundplattenabschnitt und dem Profilabschnitt des Befestigers eingeschlossen ist, und wobei das "U" einen freien ersten Schenkel (5a) hat, der vom Grundplattenabschnitt um einen hinreichend breiten Spalt beabstandet ist, dass durch den Spalt der Profilabschnitt des Dachmontageträgers seitlich in den Profilabschnitt des Befestigers eingeführt werden kann,
vorzugsweise wobei der zweite Schenkel (5b) des "U" steif, insbesondere einstückig, mit dem Grundplattenabschnitt (3) zusammenhängt,
weiter vorzugsweise wobei in dem Bereich, wo der zweite Schenkel (5b) des "U" mit dem Grundplattenabschnitt (3) zusammenhängt, quer zur Längserstreckung des ersten Teilabschnitts des Grundplattenabschnitts verlaufenden Versteifungsrippen (5c) in die Kehle zwischen Profilabschnitt (5) und Grundplattenabschnitt eingeformt sind.

4. Befestiger nach einem der vorangehenden Ansprüche, der einstückig, insbesondere als Spritzgussteil, ausgeführt ist und/oder der materialeinheitlich gefertigt ist.

5. Befestiger nach Anspruch 4, der aus einer ersten Materialkomponente für den flexiblen Grundplattenabschnitt (3) und einer zweiten Materialkomponente für den im Wesentlichen steifen Profilabschnitt (5) gefertigt ist.

6. Befestiger nach einem der vorangehenden Ansprüche, wobei mindestens der Grundplattenabschnitt (3) aus warm schweißbarem Material, insbesondere PVC oder TPO, oder klebfähigem Material gefertigt ist.

7. Befestiger nach einem der vorangehenden Ansprüche, wobei die Eckbereiche des Grundplattenabschnitts (3) durch Radien verrundet sind.

8. Befestiger nach einem der vorangehenden Ansprüche,
wobei eine Länge des Profilabschnitts mindestens dreimal, vorzugsweise mindestens fünfmal so groß ist wie eine maximale Erstreckung des Profilabschnitts in eine Richtung senkrecht auf die Längsrichtung und/oder wobei das Profil eine konstante Materialstärke aufweist.

9. Befestiger nach einem der vorhergehenden Ansprüche,
wobei eine Materialstärke des Profilabschnitts größer ist als eine Materialstärke des Grundplattenabschnitts und/oder
wobei ein E-Modul eines Materials des Profilabschnitts größer ist als ein E-Modul eines Materials des Grundplattenabschnitts.

10. Dachmontagesystem, insbesondere einer Solartechnikanlage, mit mindestens einem Dachmontageträger (7) und Befestigern (1) nach einem der vorangehenden Ansprüche.

11. Dachmontagesystem nach Anspruch 10, wobei der Dachmontageträger (7) einen langgestreckten Grundkörper mit zwei Längsseiten und zwei Stirnseiten aufweist und die Befestiger (1) zum Anbringen von mindestens einer Längsseite des Dachmontageträgers ausgebildet sind.

12. Dachmontagesystem nach Anspruch 10 oder 11, umfassend zwei oder mehr, insbesondere vier, Befestiger (1) pro Dachmontageträger (7).

13. Dachmontagesystem nach Anspruch 12, umfassend mindestens einen ersten und einen zweiten, vom ersten separaten Befestiger, wobei der erste Befestiger zum Anbringen einer ersten Längskante des Dachmontageträgers vorgesehen ist und der zweite Befestiger zum Anbringen einer zweiten Längskante des Dachmontageträgers vorgesehen ist.

14. Dachmontagesystem nach Anspruch 13, umfassend mindestens einen ersten sowie zweiten Befestiger nach Anspruch 4, wobei die Öffnungen des "U" einander zugewandt sind.

## Claims

1. A fastener (1) for a roof installation support (7), in particular a support for a solar technology system, comprising an at least sectionally flexible baseplate section (3) and exactly one substantially stiff profile section (5) projecting upward from the baseplate section and constructed to surround and positively fix a profile section (7a, 7b) of the roof installation support, wherein a height of the profile section is greater than a width of the profile section and wherein the direction of the height is perpendicular to the surface of the baseplate section and the direction of the width is perpendicular to the direction of the height and the longitudinal direction provided by the extension of the profile section, **characterized in that** the baseplate section (3) has a strip-like first partial section (3a) from which the profile section rises up and a second partial section (3b), which extends from the first partial section up to a longitudinal side as a widened area and is more flexible than the first partial section.

2. The fastener according to Claim 1, wherein the baseplate section (3) has a third and a fourth partial section (3c, 3d) extending from the ends of the first partial section to the side opposite the second partial section.

3. The fastener according to any one of the previous claims, wherein the profile section (5) is U-shaped and the "U" is open toward the baseplate section (3) such that the profile section (7a, 7b) of the roof installation support (7) which is surrounded in the installed state is enclosed between the baseplate section and the profile section of the fastener, and wherein the "U" has a free first shank (5a) that is spaced from the baseplate section by a sufficiently wide slot that the profile section of the roof installation support can be inserted laterally into the profile section of the fastener through the slot, preferably wherein the second shank (5b) of the "U" is connected stiffly, particularly integrally, to the baseplate section (3), and further preferably wherein stiffening ribs (5c) running transversely to the longitudinal extent of the first partial section of the baseplate section are formed in the throat between the profile section (5) and the baseplate section, in the area where the second shank (5b) of the "U" is connected to the baseplate section (3).

4. The fastener according to any one of the previous claims, which is constructed as integral, in particular as an injection molded part and/or is manufactured of unified material.

5. The fastener according to Claim 4, which is manufactured from a first material component for the flexible baseplate section (3) and a second material component for the substantially stiff profile section (5) .

6. The fastener according to any one of the previous claims, wherein at least the baseplate section (3) is manufactured from heat weldable material, in particular PVC or TPO, or adhesive material.

7. The fastener according to any one of the previous claims, wherein the corner areas of the baseplate section (3) are rounded off by radii.

8. The fastener according to one of the previous claims,
wherein one length of the profile section is at least three times, preferably at least five times as large as a maximal extent of the profile section in a direction perpendicular to the longitudinal direction and/or wherein the profile has a constant material thickness.

9. The fastener according to any one of the previous claims,
wherein a material thickness of the profile section is greater than a material thickness of the baseplate section and/or wherein an E-modulus of a material of the profile section is greater than an E-modulus of a material of the baseplate section.

10. A roof installation system, in particular for a solar technology system, having at least one roof installation support (7) and fasteners (1) according to any one of the previous claims.

11. The roof installation system according to Claim 10, wherein the roof installation support (7) has a longitudinally extended base body with two longitudinal sides and two end face sides, and the fasteners (1) are constructed for attaching at least one longitudinal side of the roof installation system.

12. The roof installation system according to Claim 10 or 11, comprising two or more, in particular four fasteners (1) per roof installation support (7).

13. The roof installation system according to Claim 12, comprising at least one first and one second, separate from the first, fastener, wherein the first fastener is provided for attaching a first longitudinal edge of the roof installation support and the second fastener is provided for attaching a second longitudinal edge of the roof installation support.

14. The roof installation system according to Claim 13, comprising at least one first and one second fastener according to Claim 4, wherein the openings of the "U" face one another.

## Revendications

1. Dispositif de fixation (1) d'un support de montage de toit (7), en particulier d'un support d'une installation à énergie solaire, comprenant une partie formant plaque de base (3) au moins partiellement flexible et exactement une partie profilée (5) sensiblement rigide qui s'élève depuis la partie formant plaque de base et qui est conçue pour entourer, et fixer par complémentarité de formes, une partie profilée (7a, 7b) du support de montage de toit, la hauteur de la partie profilée étant supérieure à la largeur de la partie profilée et la direction en hauteur étant perpendiculaire à la surface de la partie formant plaque de base et la direction en largeur étant perpendiculaire à la direction en hauteur et à la direction en longueur fournie par l'extension de la partie profilée, **caractérisé en ce que** la partie formant plaque de base (3) comprend une première sous-partie (3a) en forme de bande de laquelle la partie profilée s'élève et une deuxième sous-partie (3b) qui s'étend depuis la première sous-partie en direction d'un côté longitudinal sous la forme d'un élargissement et qui est plus flexible que la première sous-partie.

2. Dispositif de fixation selon la revendication 1, la partie formant plaque de base (3) comportant une troisième et une quatrième sous-partie (3c, 3d) qui s'étendent depuis la première sous-partie, à ses extrémités, en direction du côté opposé à la deuxième sous-partie.

3. Dispositif de fixation selon l'une des revendications précédentes, la partie profilée (5) étant en forme de U et le « U » étant ouvert en direction de la partie formant plaque de base (3) de manière à ce que la partie profilée (7a, 7B), entourée à l'état monté, du support de montage de toit (7) soit enfermée entre la partie formant plaque de base et la partie profilée du dispositif de fixation et le « U » comportant une première branche libre (5a), qui est espacée de la partie formant plaque de base par une fente suffisamment large, de manière à ce que la partie profilée du support de montage de toit puisse être insérée latéralement dans la partie profilée du dispositif de fixation, de préférence la deuxième branche (5b) du « U » étant attachée rigidement, en particulier d'une seule pièce, et à la partie formant plaque de base (3), plus préférablement des nervures de renforcement (5c) qui s'étendent transversalement à l'extension longitudinale de la première sous-partie de la partie formant plaque de base étant insérées par moulage, dans la région dans laquelle la deuxième branche (5b) du « U » est attachée à la partie formant plaque de base (3), dans la rainure ménagée entre la partie profilée (5) et la partie formant plaque de base.

4. Dispositif de fixation selon l'une des revendications précédentes, lequel est conçu d'une seule pièce, notamment sous la forme d'une pièce moulée par injection, et/ou est réalisé en UNE SEULE matière.

5. Dispositif de fixation selon la revendication 4, lequel est réalisé à partir d'un premier composant de matière destiné à la partie formant plaque de base (3) flexible et d'un deuxième composant de matière destiné à la partie profilée (5) sensiblement rigide.

6. Dispositif de fixation selon l'une des revendications précédentes, au moins la partie formant plaque de base (3) étant fabriquée à partir d'une matière soudable à chaud, en particulier du PVC ou du TPO, ou d'une matière adhésive.

7. Dispositif de fixation selon l'une des revendications précédentes, les régions d'angle de la partie formant plaque de base (3) étant arrondies en leur conférant un rayon de courbure.

8. Dispositif de fixation selon l'une des revendications précédentes, la longueur de la partie profilée étant au moins trois fois, de préférence au moins cinq fois, supérieure à l'extension maximale de la partie profilée dans une direction perpendiculaire à la direction longitudinale et/ou le profil ayant une épaisseur de matière constante.

9. Dispositif de fixation selon l'une des revendications précédentes, l'épaisseur de matière de la partie profilée étant supérieure à l'épaisseur de matière de la partie formant plaque de base et/ou le module d'élasticité de la matière de la partie profilée étant supérieur au module d'élasticité de la matière de la partie formant plaque de base.

10. Système de montage de toit, en particulier installation à énergie solaire, comprenant au moins un support de montage de toit (7) et des dispositifs de fixation (1) selon l'une des revendications précédentes.

11. Système de montage de toit selon la revendication 10, le support de montage de toit (7) comportant un corps de base allongé pourvu de deux côtés longitudinaux et de deux côtés frontaux et les dispositifs de fixation (1) étant conçus pour fixer au moins un côté longitudinal du support de montage de toit.

12. Système de montage de toit selon la revendication 10 ou 11, comprenant au moins deux, en particulier quatre, dispositifs de fixation (1) par support de montage de toit (7).

13. Système de montage de toit selon la revendication 12, comprenant au moins un premier dispositif de fixation et un deuxième dispositif de fixation, séparé du premier dispositif de fixation, le premier dispositif de fixation étant prévu pour fixer un premier bord longitudinal du support de montage de toit et le deuxième dispositif de fixation étant prévu pour fixer un deuxième bord longitudinal du support de montage de toit.

14. Système de montage de toit selon la revendication 13, comprenant au moins un premier et un deuxième dispositif de fixation selon la revendication 4, les ouvertures des « U » se faisant face.
